# EUROPEAN PATENT APPLICATION

(11) **EP 2 985 766 A1**
(43) Date of publication of application: **17.02.2016**
(21) Application number: 14783473.3
(22) Date of filing: 19.03.2014
(51) Int. Cl.: H01B 13/14, C08J 3/24

(54) **METHOD FOR MANUFACTURING CROSS-LINKED PVC COATED WIRE**

(30) Priority: 09.04.2013 JP 2013081004
(71) Applicant: Sumitomo Wiring Systems, Ltd., Yokkaichi-shi, Mie 510-8503 (JP)
(72) Inventor: WAKAMATSU Takanori, Yokkaichi-shi Mie 510-8503 (JP); SATO Masashi, Yokkaichi-shi Mie 510-8503 (JP)
(74) Representative: Takeuchi, Maya
(86) International application number: PCT/JP2014/057452
(87) International publication number: WO 2014/167961

(57) **Abstract**

The purpose of the present invention is to carry out cross-linking in a PVC coated wire without using electron beam irradiating equipment. A method for manufacturing cross-linked PVC coated wire performs heating of an insulating coating after formation of the same for a PVC coated wire in which the outside of a conductor has been coated by the insulating coating formed from a compound in which an oxidation preventing agent has been added to polyvinyl chloride.

## Description

### Technical Field

This invention relates to a technology of manufacturing a cross-linked PVC coated wire. Background Technology

With respect to an insulation-coated wire on which PVC (vinyl chloride) is used, there are cases that cross-linking may be used so as to improve heat resistance of an insulating coating.

Patent Reference 1 discloses a method in which a coated wire using vinyl chloride resin as an insulation-coated material is cross-linked with an electron beam.

### Prior Art Reference

### Patent Reference

Patent Reference 1: Japanese Published Patent Application 2011-168697 (P2011-168697A)

### Summary of the Invention

### Problem to be Resolved by the Invention

However, as disclosed in Patent Reference 1, electron beam cross-linking requires expensive cross-linking equipment and the like, such as electron-beam-irradiation equipment and the like. Because of this, with electron beam cross-linking, there was a problem that a product cost naturally increases.

Thus, an object of this invention is to cross-link a PVC coated wire without using electron-beam-irradiation equipment.

### Means of Solving the Problem

A first mode is a method of manufacturing a cross-linked PVC coated wire. In a PVC coated wire, in which an outer peripheral portion of a conductor is coated with an insulating coating that is formed of a compound in which an antioxidant was added to vinyl chloride resin, the insulating coating is heated after being molded.

A second mode is the method of manufacturing a cross-linked PVC coated wire related to the first mode, in which the insulating coating is heated at 50-150°C.

A third mode is the method of manufacturing a cross-linked PVC coated wire related to the first or second mode, in which the insulating coating is heated for 50 to 300 hours.

### Effects of the Invention

According to the method of manufacturing a cross-linked PVC coated wire related to the first mode, if insulating coating formed of a compound including vinyl chloride resin is molded and then heated, a cross-linking reaction and a decomposition reaction are caused. The insulating coating formed of the compound to which antioxidant was added can suppress a chain decomposition reaction at the time of heating, due to the antioxidant. Because of this, while the decomposition reaction of the insulating coating is being suppressed, the cross-linking reaction can be promoted. Thereby, a PVC coated wire can be cross-linked without using electron-beam-irradiation equipment.

According to the method of manufacturing a cross-linked PVC coated wire related to the second mode, the insulating coating is heated at 50-150 °C, so the cross-linking reaction can be promoted while the decomposition reaction is minimized.

According to the method of manufacturing a cross-linked PVC coated wire related to the third mode, the insulating coating is heated for 50 to 300 hours, so the cross-linking reaction can be promoted more effectively.

### Brief Description of the Drawings

Fig. 1 is a diagram showing a decomposition reaction due to heating.
Fig. 2 is a diagram showing a reaction of decomposition inhibition by an antioxidant.
Fig. 3 is a diagram showing a dehydrochlorination reaction of vinyl chloride.
Fig. 4 is a diagram showing a cross-linking reaction of a polyene structure.

### Mode to Implement the Invention

Hereafter, a method of manufacturing a cross-linked PVC coated wire related to embodiments will be described. In this method of manufacturing a cross-linked PVC coated wire, the insulating coating of the PVC coated wire is cross-linked without using electron-beam-irradiation equipment.

The PVC coated wire is provided with a conductor and an insulating coating, which covers an outer peripheral portion of the conductor. That is, the PVC coated wire is manufactured by forming the insulating coating by kneading a granular compound while heating, and extruding the dissolved compound by an extrusion coating device so as to cover the outer periphery of the conductor. Additionally, by cross-linking the PVC coated wire that was extrusion molded, a cross-linked PVC coated wire with improved heat resistance is manufactured.

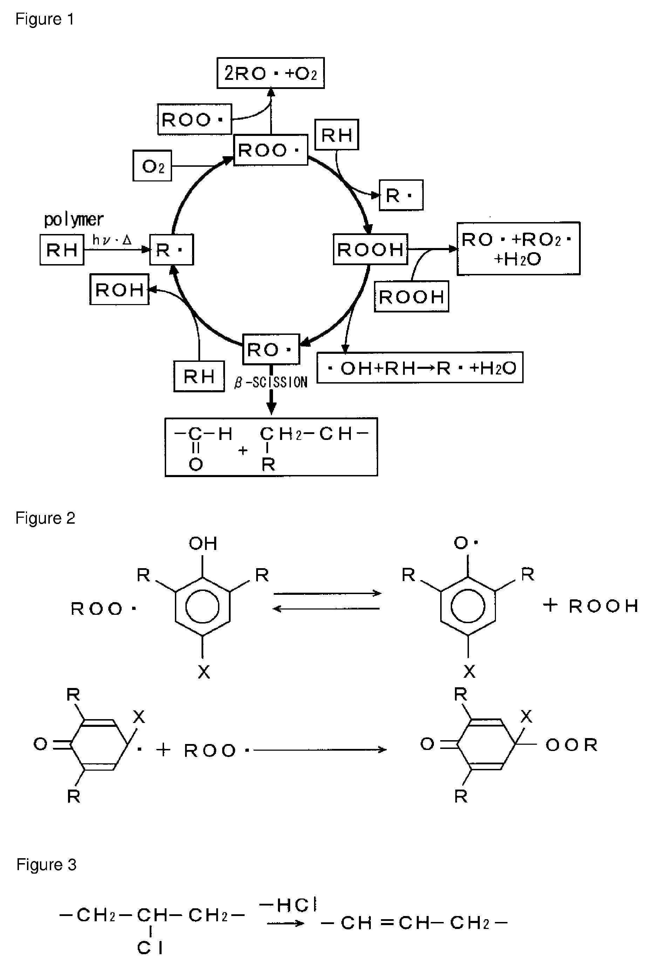

The compound that forms the insulating coating is formed by adding a plasticizer, a filler, a stabilizer, and an antioxidant to vinyl chloride resin. Here, 5-10 parts by weight of antioxidant may be added to 100 parts by weight of vinyl chloride resin. As an antioxidant, phenolic antioxidants, for example, IRGANOX 1010, IRGANOX 1010 FF, IRGANOX 1035, or IRGANOX 1035 FF (IRGANOX (registered trademark) all manufactured by BASF Japan Ltd.) can be used. Then, due to the antioxidant, a decomposition reaction that is caused by radicals shown in Fig. 1 is suppressed (see Fig. 2). That is, as radicals are caused by heat and irradiation of light (ultraviolet rays), a chain decomposition reaction proceeds. Thus, a chain decomposition reaction can be suppressed by capturing the radicals with the antioxidant.

Naturally, examples were explained in which the above-mentioned phenolic antioxidants were used as an antioxidant that is added to vinyl chloride resin, but it is not limited to this. Antioxidants other than the above-mentioned phenolic antioxidants, or a combination thereof, can also be used. Naturally, use of an antioxidant of this invention can suppress a chain decomposition reaction by action that compensates for the radicals.

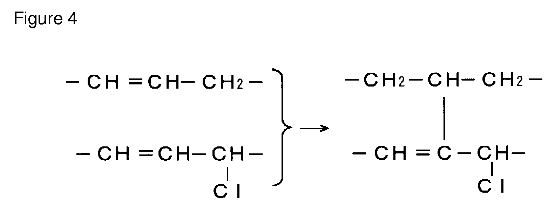

Cross-linking is performed by heating the insulating coating of the PVC coated wire after molding by extrusion from the extrusion coating device. If vinyl chloride resin is heated, a polyene structure is formed by a dehydrochlorination reaction in which chloride and hydrogen are removed (see Fig.3). Then, the cross-linking reaction of the formed polyene structure occurs (see Fig.4).

Here, a heating temperature of the vinyl chloride resin may be set at a temperature at which a chain decomposition reaction is as difficult to produce as possible (at which radicals are difficult to be caused), and at which a cross-linking reaction is promoted (at which a dehydrochlorination reaction is promoted). Here, the insulating coating is heated at 50-150°C for 50 to 300 hours.

According to a method of manufacturing a cross-linked PVC coated wire related to the above-mentioned mode, if the insulating coating formed of a compound including vinyl chloride resin is molded and then heated, a cross-linking reaction and a decomposition reaction are caused. The insulating coating formed of the compound to which antioxidant was added can suppress, with the antioxidant, a chain decomposition reaction that is caused by radicals at the time of heating. On the other hand, by heating, a polyene structure is formed along with a dehydrochlorination reaction, which causes a cross-linking reaction. Because of this, while the decomposition reaction of the insulating coating is being suppressed, a cross-linking reaction can be promoted. Thereby, a PVC coated wire can be cross-linked without using electron-beam-irradiation equipment. Furthermore, electron-beam-irradiation equipment is not used, so equipment introduction expenses and its operating cost can be reduced.

Additionally, the insulating coating is heated at 50-150°C, so while a chain decomposition reaction is being minimized, the cross-linking reaction can be promoted.

Furthermore, the insulating coating is heated for 50 to 300 hours, so the cross-linking reaction can be promoted more effectively.

Thus, this invention was explained in detail, but the above-mentioned explanation was an example, in all aspects. This invention is not limited to this. Additionally, the above-mentioned various modifications can be combined and applied as long as they are not contradictory to each other. Furthermore, countless modifications that are not shown can be assumed without departing from the scope of this invention.

## Claims

1. A method of manufacturing a cross-linked PVC coated wire, in which, in a PVC coated wire in which an outer peripheral portion of a conductor is coated with an insulating coating that is formed of a compound in which an antioxidant was added to vinyl chloride resin, the insulating coating is heated after being molded.

2. The method of manufacturing a cross-linked PVC coated wire as set forth in claim 1, wherein:
the insulating coating is heated at 50-150°C.

3. The method of manufacturing a cross-linked PVC coated wire as set forth in claim 1 or 2, wherein:
the insulating coating is heated for 50 to 300 hours.
